# EUROPÄISCHE PATENTSCHRIFT

(11) **EP 3 133 384 B1**
(45) Veröffentlichungstag und Bekanntmachung des Hinweises auf die Patenterteilung: **04.09.2019**
(21) Anmeldenummer: 16181543.6
(22) Anmeldetag: 27.07.2016
(51) Int. Cl.: G01N 21/01, G01N 21/03, G01N 21/15

(54) **VORRICHTUNG UND VERFAHREN ZUR THERMO-OPTISCHEN UNTERSUCHUNG VON PROBEN**
DEVICE AND METHOD FOR THE THERMO-OPTICAL EXAMINATION OF SAMPLES
DISPOSITIF ET PROCEDE DE RECHERCHE THERMO-OPTIQUE D'ECHANTILLONS

(30) Priorität: 28.07.2015 DE 102015214292
(43) Veröffentlichungstag der Anmeldung: 22.02.2017
(73) Patentinhaber: Fraunhofer-Gesellschaft zur Förderung der angewandten Forschung e.V., 80686 München (DE)
(72) Erfinder: Meinhardt, Jürgen, 97450 Arnstein (DE); Diegeler, Andreas, 97956 Werbach (DE); Maleska, Philipp, 97535 Wasserlosen (DE); Maas-Diegeler, Gabriele, 97956 Werbach (DE); Muff, Heiko, 97261 Güntersleben (DE); Sorg, Johannes, 97956 Werbach (DE)
(74) Vertreter: Pfenning, Meinig & Partner mbB

(56) Entgegenhaltungen:
- EP-A1- 2 662 648
- CN-U- 203 037 568
- CN-Y- 2 314 365
- DE-A1- 3 741 429
- DE-C1- 19 601 788
- GB-A- 1 144 408
- JP-A- 2003 077 969
- US-A- 4 429 999
- US-A- 6 011 622
- US-A1- 2004 001 200
- US-A1- 2004 200 227
- US-A1- 2012 107 082
- US-A1- 2014 104 615
- Anonymous: "Vacuum chamber - Wikipedia, the free encyclopedia", , 5. Juni 2015 (2015-06-05), XP055331593, Gefunden im Internet: URL:https://web-beta.archive.org/web/20150 603042325/https://en.wikipedia.org/wiki/Va cuum_chamber [gefunden am 2015-12-23]

## Beschreibung

Die vorliegende Offenbarung betrifft eine Vorrichtung zur thermooptischen Untersuchung von Proben. Die Vorrichtung weist zwei Sichtöffnungen auf, welche jeweils mit einem Sichtvakuumflansch vakuumdicht verschlossen sind. Innerhalb des Klimaschrankes zwischen den Sichtvakuumflanschen ist ein Probenteller angeordnet. Zudem sind mindestens eine Lichtquelle und mindestens ein Lichtdetektor außerhalb des Klimaschrankes so angeordnet, dass mindestens eine von einer Lichtquelle zu einem Lichtdetektor verlaufende optische Sichtachse durch die jeweils zwei Sichtfenster der zwei Sichtvakuumflansche und durch eine auf dem Probenteller angeordnete Probe verläuft. Die vorliegende Offenbarung betrifft außerdem ein Verfahren zur thermo-optischen Untersuchung von Proben.

Im Jahr 2013 wurde in der gesamten Baustoffindustrie in Deutschland ein Umsatz von über 20 Milliarden Euro erzielt, weltweit vorstellbar ein Vielfaches mehr. Allein der Bereich der Zement- bzw. Betonproduktion macht dabei ungefähr 10 % des Umsatzes aus. Im Bereich Wärmedämmung wurden im Jahr 2013 rund 10 Milliarden Euro in Deutschland umgesetzt mit stark steigender Tendenz. Im Bereich Oberflächenveredelung waren es über 2 Milliarden Euro.

Das gesamte Spektrum der Baustoffmaterialien ist wechselnden Umweltbedingungen wie Temperatur, Luftfeuchtigkeit, Licht und Schadstoffen ausgesetzt. Um die Effizienz und Funktionalität der Materialien marktführend zu gewährleisten ist die Qualitätsprüfung in Bezug auf die Veränderung der Materialien beim Einfluss verschiedener Einflüsse wie Temperatur und Feuchtigkeit daher ein wesentlicher Bestandteil der Produktion. Die Bedeutung zunehmend intelligenterer und genauerer Verfahren in diesem Bereich steigt deshalb rapide.

Es gibt sehr viel DIN-Norm Versuche, bei denen Klimaschränke eingesetzt werden, um die Langzeitstabilität von Materialien und Oberflächen zu testen (z.B. Kälte- und Wärmeprüfungen gemäß DIN EN 60068-2-1, 2-2 im Temperaturprüfschrank, Kombinierte Temperatur-Feuchteprüfung nach DIN EN 60068-2-38 im Klimaprüfschrank sowie Kältetest nach DIN EN 60068-2-1, Feuchte-Wärme-konstant-Test nach DIN EN 60068-2-78 und Wechselbeständigkeitstest DIN EN 61646, welche ebenfalls im Klimaprüfschrank vorgenommen werden).

All diese Langzeittests laufen über einen Zeitraum von bis zu 960 Stunden und noch länger. Nachteilig bei diesen Verfahren ist zudem, dass der Zustand der Materialien und Bauteile sowie deren Funktion lediglich vorher und nachher beurteilt werden, im Wesentlichen jedoch nicht während des Versuchs, d.h. während dem das Material den klimatischen Einflüssen bzw. der Atmosphäre im Klimaschrank ausgesetzt wird.

DE 196 01 788 offenbart eine Vorrichtung zur berührungslosen Erfassung von Bruchparametern einer in einer beheizbaren Kammer angeordneten Werkstoffprobe. Die Werkstoffprobe wird an jedem Ende durch Klemmen oder Befestigen an entsprechenden länglichen Haltern gehalten. Auf der Werkstoffprobe sind Markierungsstifte angeordnet. Die Kammer ist mit Öffnungen versehen, durch die ein Laserstrahl von einem Lasersender zu einem Laserempfänger transmittiert wird. Der feine Laserlichtstrahl vom Lasersender wird mittels eines rotierenden Spiegels und einer speziellen Linse in ein Lichtband umgewandelt. Die im Lichtband des Laserlichtes bzw. Laserstrahles eingebrachten Markierungsstifte auf der Werkstoffprobe erzeugen einen zeitlich begrenzten Schatten und dadurch eine Unterbrechung des Signals. Aus der Zeitdauer dieser Unterbrechung wird mittels einer elektronischen Auswerteeinrichtung die lineare Ausdehnung der Probe und daher das zu bestimmende Maß der zu ermittelnden Bruchparameter ermittelt.

Ausgehend hiervon war es deshalb Aufgabe der vorliegenden Erfindung eine Vorrichtung bzw. ein Verfahren zur Untersuchung von Proben anzugeben, womit die durch bestimmte Temperaturen und Feuchtigkeiten versursachte Dimensionsänderung der Proben während des Einflusses dieser bestimmten Temperaturen und Feuchtigkeiten auf die Probe hochgenau vermessen werden kann.

Diese Aufgabe wird durch eine Vorrichtung mit den Merkmalen des Patentanspruches 1 bzw. durch ein Verfahren mit den Merkmalen des Patentanspruches 10 gelöst. Die abhängigen Patentansprüche stellen jeweils bevorzugte Weiterbildungen dar.

Erfindungsgemäß wird somit eine Vorrichtung zur thermo-optischen Untersuchung von Proben angegeben. Die Vorrichtung enthält einen Klimaschrank mit zwei auf gegenüberliegenden Seiten des Klimaschrankes angeordneten Sichtöffnungen, wobei beide Sichtöffnungen jeweils mit einem Sichtvakuumflansch, welcher zwei sich gegenüberliegende Sichtfenster und einen zwischen diesen beiden Sichtfenstern angeordneten vakuumdichten Innenraum aufweist, vakuumdicht verschlossen sind. Zudem enthält die Vorrichtung einen innerhalb des Klimaschrankes zwischen den Sichtvakuumflanschen angeordneten Probenteller, mindestens eine Lichtquelle und mindestens einen Lichtdetektor.

Erfindungsgemäß sind die mindestens eine Lichtquelle und der mindestens eine Lichtdetektor außerhalb des Klimaschrankes so angeordnet, dass mindestens eine von einer Lichtquelle zu einem Lichtdetektor verlaufende optische Sichtachse durch die jeweils zwei Sichtfenster der zwei Sichtvakuumflansche und durch eine auf dem Probenteller angeordnete Probe verläuft. Eine Lichtquelle, ein Lichtdetektor, die jeweils zwei Sichtfenster der zwei Sichtvakuumflansche und eine auf dem Probenteller angeordnete Probe liegen also auf einer geraden Linie.

Die erfindungsgemäße Vorrichtung ist geeignet zur Durchführung eines thermo-optischen Messverfahrens (TOM-Verfahren), bei welchem die Dimensionsänderungen der Materialproben bei bestimmten Temperaturen und Feuchtigkeiten vermessen werden können. Dabei ist die Probe, z.B. ein Bauteil, auf dem Probenteller zwischen einer Lichtquelle und einem Lichtdetektor direkt im optischen Strahlengang platziert. Das Verfahren kann auch als Schattenwurfverfahren bezeichnet werden. Mit der Lichtquelle wird die Probe im Inneren der Kammer direkt beleuchtet. Die Optik des Lichtdetektors bildet das Schattenbild der Probe ab. Ändert sich die Dimension der Probe aufgrund der im Klimaschrank vorherrschenden Bedingungen, so ändert sich auch das abgebildete Schattenbild. Die so vom Lichtdetektor ermittelten Daten können direkt an einem Computer analysiert werden.

Mit der erfindungsgemäßen Vorrichtung ist es möglich die durch den Einfluss von Temperatur und Feuchtigkeit verursachte Dimensionsänderung von Materialproben hochgenau optisch zu vermessen, wobei eine Auflösung von bis zu 0,3 µm erreicht werden kann. Aufgrund der Verwendung eines Klimaschrankes kann dabei die gewünschte Temperatur bzw. Luftfeuchtigkeit, die auf die Probe einwirken soll, genau eingestellt, überwacht und kontrolliert werden.

Mit der erfindungsgemäßen Vorrichtung können verschiedenste Materialproben untersucht werden. Die erfindungsgemäße Vorrichtung findet z.B. in der Entwicklung und Charakterisierung neuer Baustoffe, in der Oberflächencharakterisierung und in der Qualitätsprüfung fertiger Bauteile der Elektrotechnik, des Maschinenbaus und der Automobilindustrie seine Anwendung.

Ein wesentlicher Vorteil der erfindungsgemäßen Vorrichtung ist, dass mit dieser die optische Vermessung durchgeführt werden kann, während die Materialprobe den gewünschten klimatischen Bedingungen, also bestimmter Temperatur und bestimmter Feuchtigkeit, im Klimaschrank ausgesetzt wird. Die Vermessung erfolgt somit online. Mit der erfindungsgemäßen Vorrichtung ist es deshalb möglich, die Entwicklung der Dimensionsänderung der Probe frühzeitig sehr genau abzuschätzen und so bereits zu einem frühen Zeitpunkt des Einwirkens der klimatischen Bedingungen auf die Probe eine Einschätzung über den Einfluss dieser Bedingungen auf die Materialprobe zu gewinnen. Dies führt zu wesentlich geringeren Prüfzeiten, woraus eine wesentliche Kosteneinsparung resultiert, da lange Prüfzeiten einen großen Kostenpunkt bei der Qualitätsprüfung von Materialien und Bauteilen ausmachen. Mit der erfindungsgemäßen Vorrichtung kann somit die Effizienz und Funktionalität von Materialien, Beschichtungen und Bauteilen wesentlich besser und schneller beurteilt werden, was zu großen Kosteneinsparungen und höherer Prozesssicherheit führt.

Die erfindungsgemäße Vorrichtung kann ebenfalls dazu eingesetzt werden, die Wechselwirkung klimatischer Veränderungen (Tauverhalten, Selbstreinigung, Selbstheilung) mit der Oberfläche verschiedenster Materialien zu charakterisieren. Mit Hilfe der erfindungsgemäßen Vorrichtung ist es möglich, eine Charakterisierung neuartiger Beschichtungen (Anti-Kratz, AntiReflex, Anti-Staub etc.) mit sehr hoher Auflösung reproduzierbar während der Messung zu betrachten.

Um mit der erfindungsgemäßen Vorrichtung eine optische Vermessung einer Probe durchführen zu können, wird die zu vermessende Probe auf dem Probenteller zwischen einer Lichtquelle und einem Lichtdetektor platziert. Da die Probe sich allerdings auch im Klimaschrank befinden muss, um während der Messung den gewünschten klimatischen Bedingungen ausgesetzt zu werden, weist der Klimaschrank zwei Sichtöffnungen auf, um so die optische Vermessung während des Einwirkens der klimatischen Bedingungen auf die Probe zu ermöglichen. Diese Sichtöffnungen sind an gegenüberliegenden Seiten des Klimaschrankes angeordnet, so dass ein Teil des Lichtes einer Lichtquelle direkt durch die erste Sichtöffnung auf die Probe fällt und ein anderer Teil des Lichtes dieser Lichtquelle direkt durch die erste Sichtöffnung und die zweite Sichtöffnung auf den Lichtdetektor fällt.

Die beiden Sichtöffnungen sind vakuumdicht verschlossen, um Wechselwirkungen der Atmosphäre innerhalb des Klimaschrankes mit der Atmosphäre außerhalb des Klimaschrankes zu vermeiden und so definierte und konstante klimatische Bedingungen innerhalb des Klimaschrankes erzeugen zu können. Beide Sichtöffnungen sind jeweils mit einem Sichtvakuumflansch verschlossen. Jeder der beiden Sichtvakuumflansche weist zwei sich gegenüberliegende Sichtfenster und einen zwischen diesen beiden Sichtfenstern angeordneten vakuumdichten Innenraum auf. Die Sichtfenster sind so angeordnet, dass ein Teil des Lichtes einer Lichtquelle direkt durch die zwei Sichtfenster des innerhalb der ersten Sichtöffnung angeordneten Vakuumflansches auf die Probe fällt und ein anderer Teil des Lichtes dieser Lichtquelle direkt durch die zwei Sichtfenster des innerhalb der ersten Sichtöffnung angeordneten Vakuumflansches und durch die zwei Sichtfenster des innerhalb der zweiten Sichtöffnung angeordneten Vakuumflansches auf den Lichtdetektor fällt. Der mindestens eine Lichtdetektor, die mindestens eine Lichtquelle, der Probenteller und die jeweils zwei Sichtfenster der zwei Sichtvakuumflansche sind also so angeordnet, dass mindestens eine von einer Lichtquelle zu einem Lichtdetektor verlaufende optische Sichtachse durch die jeweils zwei Sichtfenster der zwei Sichtvakuumflansche und durch eine auf dem Probenteller angeordnete Probe verläuft.

Die Sichtvakuumflansche sind für die Genauigkeit einer mit der erfindungsgemäßen Vorrichtung durchgeführten optischen Vermessung von großer Bedeutung. Durch die unterschiedlichen klimatischen Bedingungen innerhalb und außerhalb des Klimaschrankes werden nämlich das Kondensieren von Wasser auf den Sichtfenstern, das Beschlagen der Sichtfenster und die Vereisung der Sichtfenster prinzipiell begünstigt. Die Sichtvakuumflansche gleichen das Temperaturgefälle zwischen Innen- und Außenraum nun aber aus und vermindern somit z.B. die Kondensation von Wasser auf den Sichtfenstern, das Beschlagen der Sichtfenster und/oder die Vereisung der Sichtfenster. Eis oder Wasser auf den Sichtfenstern würde zu Fehlern bei der optischen Vermessung führen, da das Licht teilweise nicht mehr von der Lichtquelle zum Lichtdetektor gelangen kann, sondern z.B. vom Eis reflektiert oder an Wassertropfen gebrochen und abgelenkt wird. Durch die Sichtvakuumflansche kann also letztlich eine freie Sicht durch die Sichtfenster ermöglicht werden, welche für die Genauigkeit einer mit der erfindungsgemäßen Vorrichtung durchgeführten optischen Vermessung von elementarer Bedeutung ist.

Eine bevorzugte Ausführungsform der erfindungsgemäßen Vorrichtung zeichnet sich dadurch aus, dass die Sichtfenster der Sichtvakuumflansche eine Beschichtung aufweisen, die bei elektrischer Kontaktierung eine Filter- und/oder Antibeschlagwirkung aufweist. Besonders bevorzugt enthält diese Beschichtung ein anorganisch-organisches Hybridpolymer, z.B. ein ORMOCER®, oder besteht daraus. Durch eine Antibeschlagwirkung wird ein Beschlagen der Sichtfenster noch weiter vermindert. Eine Filterwirkung der Beschichtung hat den Effekt, dass das Licht der Lichtquelle gefiltert und damit spezifisch angepasst werden kann, bevor es auf die Probe bzw. den Lichtdetektor fällt. Durch eine elektrische Kontaktierung kann eine einfache Einbindung dieser Effekte in eine optische Vermessung einer Probe erfolgen. Anorganisch-organische Hybridpolymere und insbesondere ORMOCER®e sind für diese Art von Beschichtung ganz besonders geeignet.

Eine weitere bevorzugte Ausführungsform ist dadurch gekennzeichnet, dass die Sichtfenster der Sichtvakuumflansche
- aus Quarzglas bestehen,
- beheizbar sind,
- optisch geschliffen sind,
- elektrisch kontaktierbar sind,
- einen Mindestdurchmesser von 30 mm aufweisen, und/oder
- einen maximalen Durchmesser von 65 mm aufweisen.

Durch all diese bevorzugten Eigenschaften der Sichtfenster kann die Kondensation von Wasser auf den Sichtfenstern, das Beschlagen der Sichtfenster und/oder die Vereisung der Sichtfenster weiter vermindert werden, wodurch eine noch genauere optische Vermessung ermöglicht wird.

Zudem ist es bevorzugt, dass mindestens einer der Sichtvakuumflansche
- mindestens einen Anschluss zur Evakuierung des Sichtvakuumflansches und/oder zur Befüllung des Sichtvakuumflansches mit einem Gas,
- mindestens eine Durchführung für elektrische Anschlüsse und/oder für Thermoelemente, und/oder
- mindestens eine Positionshalterung für Sensoren aufweist.

Durch eine Evakuierung des Innenraums kann eine sehr gute Wärmedämmung erreicht werden. Ein Gas innerhalb des Innenraums kann temperiert werden, wodurch die Kondensation von Wasser auf den Sichtfenstern, das Beschlagen der Sichtfenster und/oder die Vereisung der Sichtfenster weiter vermindert werden kann.

Gemäß einer weiteren bevorzugten Ausführungsform ist der Klimaschrank dazu geeignet Temperaturen von -70 bis 180 °C und/oder Feuchtigkeiten von 0 bis 98 % in der Atmosphäre innerhalb des Klimaschrankes zu erzeugen. Auf diese Weise können Proben bei einem Einfluss von Temperaturen im Bereich von -70 bis 180 °C bzw. einem Einfluss von Feuchtigkeiten im Bereich von 0 bis 98 % vermessen werden.

Eine weitere bevorzugte Ausführungsform zeichnet sich dadurch aus, dass innerhalb des Klimaschrankes mindestens ein Sensor zur Messung der Temperatur und/oder der Feuchtigkeit der Atmosphäre innerhalb des Klimaschrankes angeordnet ist. Auf diese Weise ist eine einfache Messung und Kontrolle der auf die Probe einwirkenden Temperatur bzw. Feuchtigkeit möglich. Vorzugsweise ist der mindestens eine Sensor in der Nähe des Probentellers angeordnet. Besonders bevorzugt ist der mindestens eine Sensor neben und/oder über dem Probenteller angeordnet. Besonders bevorzugt werden zwei Sensoren verwendet.

Gemäß einer weiteren bevorzugten Ausführungsform des erfindungsgemäßen Verfahrens weist der Klimaschrank zusätzlich mindestens eine Versorgungsöffnung auf, die mit einem Versorgungsvakuumflansch vakuumdicht verschlossen ist. Besonders bevorzugt ist die mindestens eine Versorgungsöffnung an zumindest einer eine Sichtöffnung aufweisenden Seite des Klimaschrankes oberhalb dieser Sichtöffnung angeordnet ist und/oder senkrecht oberhalb des Probentellers angeordnet. Durch den Versorgungsvakuumflansch können verschiedene weitere Komponenten von außerhalb des Klimaschranks ins Innere des Klimaschranks transferiert und im Inneren des Klimaschranks platziert werden. Die Versorgungsöffnungen, welche an einer eine Sichtöffnung aufweisenden Seite des Klimaschrankes oberhalb dieser Sichtöffnung angeordnet sind, können parallel zu dieser Sichtöffnung angeordnet sein und können der Versorgung von im Klimaschrank angeordneten Feuchte- und/oder Temperaturfühlern dienen. Die senkrecht oberhalb des Probentellers angeordnete Öffnung kann zur Wägung, z.B. Unterflurwägung, und/oder zur Belastung, z.B. elektrischen und/oder mechanischen Belastung, der Probe verwendet werden.

Vorzugsweise weist der Versorgungsvakuumflansch eine Spezialhalterung für ein automatisches Handhabungssystem und/oder einen Positionstisch mit beweglicher Schubeinheit auf, wobei auf dem Positionstisch bevorzugt ein Dampferzeuger, eine Wägevorrichtung zur Unterflurwägung und/oder eine Lastvorrichtung zur Belastung angebracht ist. Ein Dampferzeuger kann zur Erhöhung der Luftfeuchtigkeit eingesetzt werden. Mit Hilfe einer Wägevorrichtung kann während dem Einwirken der klimatischen Bedingungen auf die Probe das Gewicht bzw. die Änderung des Gewichts der Probe bestimmt werden, wodurch noch genauere Erkenntnisse über den Einfluss der klimatischen Bedingungen auf die Probe gewonnen werden können. Bei der Lastvorrichtung kann es sich um eine Vorrichtung zur mechanischen Belastung der Probe und/oder um eine Vorrichtung zur elektrischen Belastung der Probe handeln. Die Probe kann so während dem Einwirken der klimatischen Bedingungen zusätzlich elektrisch und/oder mechanisch belastet werden. Auf diese Weise kann mit der erfindungsgemäßen Vorrichtung die Wirkung verschiedenster Einflüsse auf die zu vermessende Probe untersucht werden.

Die erfindungsgemäße Vorrichtung kann in einer weiteren bevorzugten Ausführungsform eine Vorrichtung zur gezielten Betauung der einen zu vermessenden Probe enthalten.

Eine weitere bevorzugte Ausführungsform ist dadurch gekennzeichnet, dass die mindestens eine Lichtquelle eine Hochleistungs-LED oder eine Ulbricht-Kugel ist und/oder der Lichtdetektor eine Kamera, bevorzugt eine CMOS-Kamera mit telezentrischer Optik, ist. Durch diese speziellen Lichtquellen bzw. Lichtdetektoren wird eine sehr hohe Auflösung und damit eine sehr genaue optische Vermessung ermöglicht.

Weiterhin ist bevorzugt, dass der Lichtdetektor mit einer Vorrichtung zur softwarebasierten Auswertung verbunden ist. Bei dieser Vorrichtung kann es sich um einen Computer handeln. Auf diese Weise können die mit dem Lichtdetektor ermittelten Daten auf einfache Weise ausgewertet werden. Vorzugsweise wird die Vorrichtung zu softwarebasierten Auswertung auch zur softwarebasierten Steuerung der gesamten oder zumindest eines Teils der erfindungsgemäßen Vorrichtung verwendet. In diesem Fall kann beispielweise mit Hilfe dieser Vorrichtung die Temperatur und/oder die Luftfeuchtigkeit im Innern des Klimaschranks und/oder die Stärke der Lichtquelle eingestellt werden. Auch eine elektrische und/oder mechanische Belastung könnte mit Hilfe dieser Vorrichtung gesteuert werden. Die Vorrichtung zur softwarebasierten Auswertung könnte auch mit der Wägevorrichtung verbunden sein, um von dieser ermittelte Gewichtsdaten der Probe auszuwerten.

Die vorliegende Erfindung betrifft auch ein Verfahren zur thermo-optischen Untersuchung von Proben mit einer erfindungsgemäßen Vorrichtung. Bei diesem erfindungsgemäßen Verfahren wird eine Probe auf dem Probenteller positioniert, die Probe für einen gewünschten Zeitraum einer im Klimaschrank vorherrschenden über den Zeitraum gleichbleibenden oder wechselnden Atmosphäre mit einer über den Zeitraum gleichbleibenden oder wechselnden Temperatur und einer über den Zeitraum gleichbleibenden oder wechselnden Feuchtigkeit ausgesetzt und die Probe über den gesamten Zeitraum oder in über diesen Zeitraum verteilten nicht zusammenhängenden Zeitabschnitten so mit mindestens einer Lichtquelle beleuchtet, dass ein Teil des Lichtes dieser Lichtquelle direkt durch die zwei Sichtfenster eines der Sichtvakuumflansche auf die Probe fällt und ein anderer Teil des Lichtes dieser Lichtquelle direkt durch die jeweils zwei Sichtfenster der zwei Sichtvakuumflansche auf einen Lichtdetektor fällt.

Beim erfindungsgemäßen Verfahren handelt es sich um ein thermo-optisches Messverfahren (TOM-Verfahren), bei welchem die Dimensionsänderung der zu vermessenden Probe bei bestimmten Temperaturen und Feuchtigkeiten vermessen werden kann. Die Probe, z.B. ein Bauteil, ist auf dem Probenteller zwischen einer Lichtquelle und einem Lichtdetektor direkt im optischen Strahlengang platziert. Die Probe wird folglich mit der Lichtquelle direkt beleuchtet. Die Optik des Lichtdetektors bildet schließlich das Schattenbild der Probe ab. Ändert sich die Dimension der Probe aufgrund des Einflusses der im Klimaschrank vorherrschenden Atmosphäre, so ändert sich auch das abgebildete Schattenbild. Die so vom Lichtdetektor ermittelten Daten können direkt an einem Computer analysiert werden.

Gemäß einer bevorzugten Variante des erfindungsgemäßen Verfahrens liegt die Temperatur im Bereich von -70 bis 180 °C und/oder die Feuchtigkeit im Bereich von 0 bis 98 %.

Eine weitere bevorzugte Variante zeichnet sich dadurch aus, dass der gewünschte Zeitraum 0,5 bis 960 Stunden, bevorzugt 0,5 bis 180 Stunden, beträgt. Insbesondere ist es mit dem erfindungsgemäßen Verfahren möglich, die Entwicklung der Dimensionsänderung der Probe frühzeitig sehr genau abzuschätzen und so bereits zu einem frühen Zeitpunkt der Einwirkung der im Klimaschrank vorherrschenden Atmosphäre eine Einschätzung über den Einfluss dieser Atmosphäre auf die Materialprobe zu gewinnen. Der gewünschte Zeitraum im erfindungsgemäßen Verfahren kann somit lediglich bis zu 180 Stunden betragen, woraus eine wesentliche Kosteneinsparung resultiert. Alternativ sind natürlich auch Langzeitmessungen von bis 960 Stunden möglich.

Weiterhin ist es möglich, dass die Probe während des gewünschten Zeitraums gewogen, einer mechanischen Belastung ausgesetzt und/oder einer elektrischen Belastung ausgesetzt wird. Auf diese Weise kann die Wirkung verschiedenster Einflüsse auf die zu vermessende Probe untersucht werden.

Eine weitere bevorzugte Variante ist dadurch gekennzeichnet, dass die Atmosphäre ein Gas oder ein Gasgemisch enthält oder daraus besteht, welches ausgewählt ist aus der Gruppe bestehend aus Luft, Schutzgasen, insbesondere Stickstoff und Argon, und Mischungen hiervon. Hierbei kann die Probe speziellen Gasatmosphären ausgesetzt werden, um so auch den Einfluss bestimmter Gase und Gasgemische auf die Probe zu untersuchen.

Zudem ist es bevorzugt, dass der Innenraum mindestens eines der Sichtvakuumflansche evakuiert ist oder ein Gas enthält, welches ausgewählt ist aus der Gruppe bestehend aus Luft, Schutzgasen, insbesondere Stickstoff und Argon, und Mischungen hiervon. Durch eine Evakuierung des Innenraums kann eine sehr gute Wärmedämmung erreicht werden. Ein Gas innerhalb des Innenraums kann temperiert werden, wodurch die Kondensation von Wasser auf den Sichtfenstern, das Beschlagen der Sichtfenster und/oder die Vereisung der Sichtfenster weiter vermindert werden kann.

Die vorliegende Erfindung wird anhand der nachfolgenden Figuren näher erläutert ohne die Erfindung auf die speziell dargestellten Parameter zu beschränken.

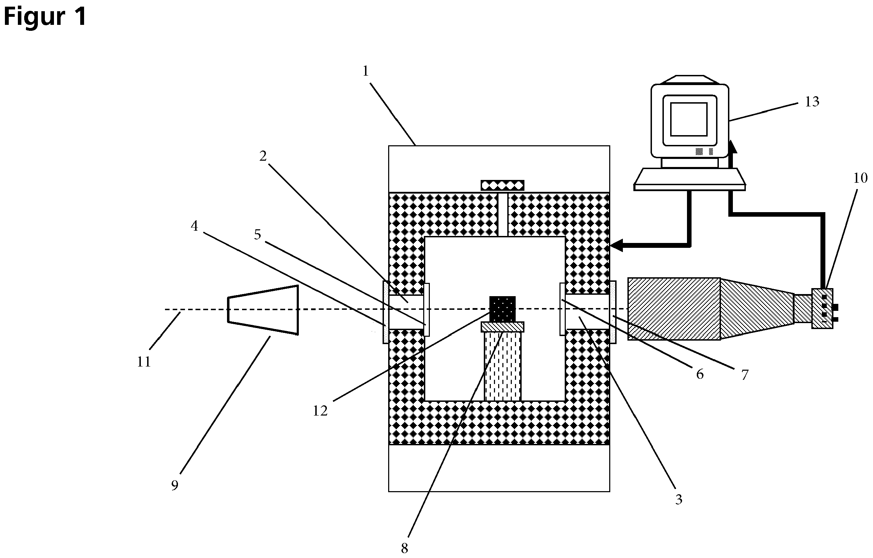

Fig. 1 zeigt eine erfindungsgemäße Vorrichtung zur thermo-optischen Untersuchung von Proben. Die Vorrichtung enthält einen Klimaschrank 1 mit zwei auf gegenüberliegenden Seiten des Klimaschrankes angeordneten Sichtöffnungen. Die erste Sichtöffnung ist mit einem ersten Sichtvakuumflansch 2 vakuumdicht verschlossen. Der erste Sichtvakuumflansch 2 weist zwei sich gegenüberliegende Sichtfenster 4, 5 und einen zwischen diesen beiden Sichtfenstern 4, 5 angeordneten vakuumdichten Innenraum auf. Die zweite Sichtöffnung ist mit einem zweiten Sichtvakuumflansch 3 vakuumdicht verschlossen, wobei der zweite Sichtvakuumflansch 3 zwei sich gegenüberliegende Sichtfenster 6, 7 und einen zwischen diesen beiden Sichtfenstern 6, 7 angeordneten vakuumdichten Innenraum aufweist. Die Vorrichtung enthält außerdem einen innerhalb des Klimaschrankes 1 zwischen den Sichtvakuumflanschen 2 und 3 angeordneten Probenteller 8, eine Lichtquelle 9 und einen Lichtdetektor 10. Bei der Lichtquelle 9 handelt es sich um eine Hochleistungs-LED. Der Lichtdetektor 10 ist eine CMOS-Kamera. Die Lichtquelle 9 und der Lichtdetektor 10 sind außerhalb des Klimaschrankes 1 so angeordnet, dass eine von der Lichtquelle 9 zum Lichtdetektor 10 verlaufende optische Sichtachse 11 durch die jeweils zwei Sichtfenster 4, 5, 6, 7 der zwei Sichtvakuumflansche 2, 3 und durch eine auf dem Probenteller 8 angeordnete Probe 12 verläuft. Der Lichtdetektor 10 ist mit einer Vorrichtung zur softwarebasierten Auswertung 13 verbunden, wobei es sich bei dieser Vorrichtung um einen Computer handelt.

## Patentansprüche

1. Vorrichtung zur Durchführung eines thermo-optischen Messverfahrens, bei welchem die Dimensionsänderungen von Proben bei bestimmten Temperaturen und Feuchtigkeiten vermessen werden können, enthaltend einen Klimaschrank (1) mit zwei auf gegenüberliegenden Seiten des Klimaschrankes angeordneten Sichtöffnungen, wobei beide Sichtöffnungen jeweils mit einem Sichtvakuumflansch (2, 3), welcher zwei sich gegenüberliegende Sichtfenster (4, 5, 6, 7) und einen zwischen diesen beiden Sichtfenstern (4, 5, 6, 7) angeordneten vakuumdichten Innenraum aufweist, vakuumdicht verschlossen sind, einen innerhalb des Klimaschrankes (1) zwischen den Sichtvakuumflanschen (2, 3) angeordneten Probenteller (8), mindestens eine Lichtquelle (9) und mindestens einen Lichtdetektor (10), wobei die Optik des Lichtdetektors dazu geeignet ist, das Schattenbild einer Probe abzubilden, und wobei die mindestens eine Lichtquelle (9) und der mindestens eine Lichtdetektor (10) außerhalb des Klimaschrankes (1) so angeordnet sind, dass mindestens eine von einer Lichtquelle (9) zu einem Lichtdetektor (10) verlaufende optische Sichtachse (11) durch die jeweils zwei Sichtfenster (4, 5, 6, 7) der zwei Sichtvakuumflansche (2, 3) und durch eine auf dem Probenteller (8) angeordnete Probe (12) verläuft.

2. Vorrichtung nach dem vorhergehenden Anspruch, **dadurch gekennzeichnet, dass** die Sichtfenster (4, 5, 6, 7) der Sichtvakuumflansche (2, 3) eine Beschichtung aufweisen, die bei elektrischer Kontaktierung eine Filter- und Antibeschlagwirkung aufweist, wobei die Beschichtung bevorzugt ein anorganisch-organisches Hybridpolymer enthält oder daraus besteht.

3. Vorrichtung nach einem der vorhergehenden Ansprüche, **dadurch gekennzeichnet, dass** die Sichtfenster (4, 5, 6, 7) der Sichtvakuumflansche (2, 3)
• aus Quarzglas bestehen,
• beheizbar sind,
• optisch geschliffen sind,
• elektrisch kontaktierbar sind,
• einen Mindestdurchmesser von 30 mm aufweisen, und
• einen maximalen Durchmesser von 65 mm aufweisen.

4. Vorrichtung nach einem der vorhergehenden Ansprüche, **dadurch gekennzeichnet, dass** mindestens einer der Sichtvakuumflansche (2, 3)
• mindestens einen Anschluss zur Evakuierung des Sichtvakuumflansches und zur Befüllung des Sichtvakuumflansches mit einem Gas,
• mindestens eine Durchführung für elektrische Anschlüsse und für Thermoelemente, und
• mindestens eine Positionshalterung für Sensoren
aufweist.

5. Vorrichtung nach einem der vorhergehenden Ansprüche, **dadurch gekennzeichnet, dass** der Klimaschrank (1) dazu geeignet ist Temperaturen von -70 bis 180 °C und/oder Feuchtigkeiten von 0 bis 98 % in der Atmosphäre innerhalb des Klimaschrankes (1) zu erzeugen.

6. Vorrichtung nach einem der vorhergehenden Ansprüche, **dadurch gekennzeichnet, dass** innerhalb des Klimaschrankes (1) mindestens ein Sensor zur Messung der Temperatur und/oder der Feuchtigkeit der Atmosphäre innerhalb des Klimaschrankes (1) angeordnet ist, wobei der mindestens eine Sensor bevorzugt in der Nähe des Probentellers (8) angeordnet ist.

7. Vorrichtung nach einem der vorhergehenden Ansprüche, **dadurch gekennzeichnet, dass** der Klimaschrank (1) zusätzlich mindestens eine Versorgungsöffnung aufweist, die mit einem Versorgungsvakuumflansch vakuumdicht verschlossen ist, wobei die mindestens eine Versorgungsöffnung bevorzugt an zumindest einer eine Sichtöffnung aufweisenden Seite des Klimaschrankes (1) oberhalb dieser Sichtöffnung angeordnet ist und/oder senkrecht oberhalb des Probentellers (8) angeordnet ist.

8. Vorrichtung nach einem der vorhergehenden Ansprüche, **dadurch gekennzeichnet, dass** die mindestens eine Lichtquelle (9) eine Hochleistungs-LED oder eine Ulbricht-Kugel ist und der Lichtdetektor (10) eine Kamera, bevorzugt eine CMOS-Kamera mit telezentrischer Optik, ist.

9. Vorrichtung nach einem der vorhergehenden Ansprüche, **dadurch gekennzeichnet, dass** der Lichtdetektor (10) mit einer Vorrichtung zur softwarebasierten Auswertung (13) verbunden ist.

10. Verfahren zur thermo-optischen Untersuchung von Proben mit einer Vorrichtung gemäß einem der Ansprüche 1 bis 9, bei welchem eine Probe (12) auf dem Probenteller (8) positioniert wird, die Probe für einen gewünschten Zeitraum einer im Klimaschrank (1) vorherrschenden über den Zeitraum gleichbleibenden oder wechselnden Atmosphäre mit einer über den Zeitraum gleichbleibenden oder wechselnden Temperatur und einer über den Zeitraum gleichbleibenden oder wechselnden Feuchtigkeit ausgesetzt wird und die Probe (12) über den gesamten Zeitraum oder in über diesen Zeitraum verteilten nicht zusammenhängenden Zeitabschnitten so mit einer Lichtquelle (9) beleuchtet wird, dass ein Teil des Lichtes dieser Lichtquelle (9) direkt durch die zwei Sichtfenster (4, 5) eines der Sichtvakuumflansche (2) auf die Probe (12) fällt und ein anderer Teil des Lichtes dieser Lichtquelle direkt durch die jeweils zwei Sichtfenster (4, 5, 6, 7) der zwei Sichtvakuumflansche (2, 3) auf den Lichtdetektor (10) fällt.

11. Verfahren nach Anspruch 10, **dadurch gekennzeichnet, dass** die Temperatur im Bereich von -70 bis 180 °C und/oder die Feuchtigkeit im Bereich von 0 bis 98 % liegt.

12. Verfahren nach einem der Ansprüche 10 bis 11, **dadurch gekennzeichnet, dass** der gewünschte Zeitraum 0,5 bis 960 Stunden, bevorzugt 0,5 bis 180 Stunden, beträgt.

13. Verfahren nach einem der Ansprüche 10 bis 12, **dadurch gekennzeichnet, dass** die Probe (12) während des gewünschten Zeitraums gewogen, einer mechanischen Belastung ausgesetzt und/oder einer elektrischen Belastung ausgesetzt wird.

14. Verfahren nach einem der Ansprüche 10 bis 13, **dadurch gekennzeichnet, dass** die Atmosphäre ein Gas oder ein Gasgemisch enthält oder daraus besteht, welches ausgewählt ist aus der Gruppe bestehend aus Luft, Schutzgasen, insbesondere Stickstoff und Argon, und Mischungen hiervon.

15. Verfahren nach einem der Ansprüche 10 bis 14, **dadurch gekennzeichnet, dass** der Innenraum mindestens eines der Sichtvakuumflansche (2, 3) evakuiert ist oder ein Gas enthält, welches ausgewählt ist aus der Gruppe bestehend aus Luft, Schutzgasen, insbesondere Stickstoff und Argon, und Mischungen hiervon.

## Claims

1. Device for implementing a thermo-optical measuring method in which the dimensional changes of samples can be measured at specific temperatures and humidities, comprising a climatic cabinet (1) with two viewing openings disposed on opposite sides of the climatic cabinet, both viewing openings respectively being closed in a vacuum seal with a viewing vacuum flange (2, 3), which has two opposite viewing windows (4, 5, 6, 7) and a vacuum-sealed interior disposed between these two viewing windows (4, 5, 6, 7), a sample plate (8) disposed inside the climatic cabinet (1) between the viewing vacuum flanges (2, 3), at least one light source (9) and at least one light detector (10), the lens system of the light detector being suitable for imaging the silhouette of a sample, and the at least one light source (9) and the at least one light detector (10) being disposed outside the climatic cabinet (1) such that at least one optical viewing axis (11) extending from a light source (9) to a light detector (10) extends through the respectively two viewing windows (4, 5, 6, 7) of the two viewing vacuum flanges (2, 3) and through a sample (12) disposed on the sample plate (8).

2. Device according to the preceding claim, **characterised in that** the viewing windows (4, 5, 6, 7) of the viewing vacuum flanges (2, 3) have a coating which, in the case of electrical contacting, has a filter- and anti-condensation effect, the coating preferably comprising an inorganic-organic hybrid polymer or consisting thereof.

3. Device according to one of the preceding claims, **characterised in that** the viewing windows (4, 5, 6, 7) of the viewing vacuum flanges (2, 3)
• consist of quartz glass,
• are heatable,
• are ground optically,
• are electrically contactable,
• have a minimum diameter of 30 mm, and
• have a maximum diameter of 65 mm.

4. Device according to one of the preceding claims, **characterised in that** at least one of the viewing vacuum flanges (2, 3) has
• at least one connection for evacuation of the viewing vacuum flange and for filling the viewing vacuum flange with a gas,
• at least one duct for electrical connections and for thermoelements, and
• at least one position mounting for sensors.

5. Device according to one of the preceding claims, **characterised in that** the climatic cabinet (1) is suitable for producing temperatures of -70 to 180°C and/or humidities of 0 to 98% in the atmosphere inside the climatic cabinet (1).

6. Device according to one of the preceding claims, **characterised in that**, inside the climatic cabinet (1), at least one sensor for measuring the temperature and/or the humidity of the atmosphere is disposed inside the climatic cabinet (1), the at least one sensor being disposed preferably in the vicinity of the sample plate (8).

7. Device according to one of the preceding claims, **characterised in that** the climatic cabinet (1) has in addition at least one supply opening which is closed in a vacuum seal with a supply vacuum flange, the at least one supply opening being disposed preferably on at least one side of the climatic cabinet (1), which has a viewing opening, above this viewing opening and/or being disposed vertically above the sample plate (8).

8. Device according to one of the preceding claims, **characterised in that** the at least one light source (9) is a high-performance LED or an Ulbricht globe and the light detector (10) is a camera, preferably a CMOS camera with a telecentric lens.

9. Device according to one of the preceding claims, **characterised in that** the light detector (10) is connected to a device for software-based evaluation (13).

10. Method for thermo-optical examination of samples having a device according to one of the claims 1 to 9, in which a sample (12) is positioned on the sample plate (8), the sample is subjected, for a desired period of time, to an atmosphere which prevails in the climatic cabinet (1) and is constant or changes over the period of time, having a temperature which is constant or changes over the period of time and a humidity which is constant or changes over the period of time and the sample (12) is illuminated, over the entire period of time or in time portions which are distributed over this period of time and are not continuous, with a light source (9) such that a part of the light of this light source (9) falls directly through the two viewing windows (4, 5) of one of the viewing vacuum flanges (2) onto the sample (12), and another part of the light of this light source falls directly through the respectively two viewing windows (4, 5, 6, 7) of the two viewing vacuum flanges (2, 3) onto the light detector (10).

11. Method according to claim 10, **characterised in that** the temperature is in the range of -70 to 180°C and/or the humidity in the range of 0 to 98%.

12. Method according to one of the claims 10 to 11, **characterised in that** the desired period of time is 0.5 to 960 hours, preferably 0.5 to 180 hours.

13. Method according to one of the claims 10 to 12, **characterised in that** the sample (12) is weighed during the desired period of time, subjected to a mechanical loading and/or subjected to an electrical loading.

14. Method according to one of the claims 10 to 13, **characterised in that** the atmosphere comprises a gas or a gas mixture or consists thereof, which is selected from the group consisting of air, protective gases, in particular nitrogen and argon, and mixtures hereof.

15. Method according to one of the claims 10 to 14, **characterised in that** the interior of at least one of the viewing vacuum flanges (2, 3) is evacuated or comprises a gas which is selected from the group consisting of air, protective gases, in particular nitrogen and argon, and mixtures hereof.

## Revendications

1. Dispositif pour la mise en oeuvre d'une opération de mesure thermo-optique, dans lequel les variations de dimensions d'échantillons peuvent être mesurées à certaines températures et pour certaines humidités, contenant une armoire climatique (1) comportant deux orifices d'inspection disposés sur des côtés opposés de l'armoire climatique, les deux orifices d'inspection étant chacun obturés d'une manière étanche au vide à l'aide d'une bride à vide d'inspection (2, 3), qui présente deux regards opposés (4, 5, 6, 7) et un espace intérieur, étanche au vide, disposé entre ces deux regards (4, 5, 6, 7), une nacelle porte-échantillon (8), disposée à l'intérieur de l'armoire climatique (1) entre les deux brides à vide d'inspection (2, 3), au moins une source de lumière (9) et au moins un détecteur de lumière (10), l'optique du détecteur de lumière étant apte à former la silhouette d'un échantillon, et l'au moins une source de lumière (9) et l'au moins un détecteur de lumière (10) étant disposés à l'extérieur de l'armoire climatique (1) de telle sorte qu'au moins un axe optique de vue (11), courant d'une source de lumière (9) à un détecteur de lumière (10), traverse chacun des deux regards (4, 5, 6, 7) des deux brides à vide d'inspection (2, 3) et un échantillon (12) disposé sur la nacelle porte-échantillon (8).

2. Dispositif selon la revendication précédente, **caractérisé en ce que** les regards (4, 5, 6, 7) des brides à vide d'inspection (2, 3) présentent un revêtement qui, en cas de connexion électrique, présente un effet de filtration et antibuée, le revêtement contenant de préférence un polymère hybride inorganique-organique ou en étant constitué.

3. Dispositif selon l'une des revendications précédentes, **caractérisé en ce que** les regards (4, 5, 6, 7) des brides à vide d'inspection (2, 3)
- sont constitués de verre quartzeux,
- peuvent être chauffés,
- ont subi un doucissage optique,
- sont électriquement connectables,
- présentent un diamètre minimal de 30 mm, et
- présentent un diamètre maximal de 65 mm.

4. Dispositif selon l'une des revendications précédentes, **caractérisé en ce que** l'au moins une bride à vide d'inspection (2, 3) présente
- au moins un raccordement pour faire le vide dans la bride à vide d'inspection, et pour remplir d'un gaz la bride à vide d'inspection,
- au moins un passage pour des raccordements électriques et pour des thermo-éléments, et
- au moins un support de positionnement pour des capteurs.

5. Dispositif selon l'une des revendications précédentes, **caractérisé en ce que** l'armoire climatique (1) est apte à produire dans l'atmosphère située à l'intérieur de l'armoire climatique (1) des températures de -70 à 180 °C et/ou des humidités de 0 à 98 %.

6. Dispositif selon l'une des revendications précédentes, **caractérisé en ce qu'**à l'intérieur de l'armoire climatique (1) est disposé au moins un capteur pour la mesure de la température et/ou de l'humidité de l'atmosphère située à l'intérieur de l'armoire climatique (1), l'au moins un capteur étant de préférence disposé au voisinage de la nacelle porte-échantillon (8).

7. Dispositif selon l'une des revendications précédentes, **caractérisé en ce que** l'armoire climatique (1) présente en outre au moins une ouverture d'alimentation, qui est obturée d'une manière étanche au vide à l'aide d'une bride à vide d'alimentation, l'au moins une ouverture d'alimentation étant de préférence disposée sur au moins un côté, comportant un orifice d'inspection, de l'armoire climatique (1) au-dessus de cet orifice d'inspection, et/ou est disposé verticalement au-dessus de la nacelle porte-échantillon (8).

8. Dispositif selon l'une des revendications précédentes, **caractérisé en ce que** l'au moins une source de lumière (9) est une LED haute performance ou une sphère d'Ulbricht, et le détecteur de lumière (10) est une caméra, de préférence une caméra CMOS à optique télécentrique.

9. Dispositif selon l'une des revendications précédentes, **caractérisé en ce que** le détecteur de lumière (10) est relié à un dispositif destiné à une évaluation (13) à base d'un logiciel.

10. Procédé d'examen thermo-optique d'échantillons à l'aide d'un dispositif selon l'une des revendications 1 à 9, dans lequel un échantillon (12) est positionné sur la nacelle porte-échantillon (8), l'échantillon est exposé pendant un laps de temps souhaité à une atmosphère régnant au préalable dans l'armoire climatique (1), constante ou variable sur le laps de temps, et présentant une température constante ou variable sur le laps de temps et une humidité constante ou variable sur le laps de temps, et l'échantillon (12) étant éclairé, pendant la totalité du laps de temps, ou dans des intervalles de temps non continus répartis sur ce laps de temps, avec une source de lumière (9) de telle sorte qu'une partie de la lumière de cette source de lumière (9) tombe directement sur l'échantillon (12) en traversant les deux regards (4, 5) de l'une des brides à vide d'inspection (2), et qu'une autre partie de la lumière de cette source de lumière tombe directement sur le détecteur de lumière (10) en passant par les deux regards (4, 5, 6, 7) des deux brides à vide d'inspection (2, 3).

11. Procédé selon la revendication 10, **caractérisé en ce que** la température est comprise dans une plage de -70 à 180 °C et/ou l'humidité est comprise dans une plage de 0 à 98 %.

12. Procédé selon l'une des revendications 10 à 11, **caractérisé en ce que** le laps de temps souhaité est de 0,5 à 960 heures, de préférence de 0,5 à 180 heures.

13. Procédé selon l'une des revendications 10 à 12, **caractérisé en ce que** l'échantillon (12) est, pendant le laps de temps souhaité, pesé, exposé à une contrainte mécanique et/ou exposé à une contrainte électrique.

14. Procédé selon l'une des revendications 10 à 13, **caractérisé en ce que** l'atmosphère contient un gaz ou un mélange de gaz ou en est constituée, qui est choisi dans le groupe consistant en l'air, les gaz de protection, en particulier l'azote et l'argon, et les mélanges de ceux-ci.

15. Procédé selon l'une des revendications 10 à 14, **caractérisé en ce qu'**on a fait le vide dans l'espace intérieur d'au moins l'une des brides à vide d'inspection (2, 3), ou **en ce que** ledit espace intérieur contient un gaz qui est choisi dans le groupe consistant en l'air, les gaz de protection, en particulier l'azote et l'argon, et les mélanges de ceux-ci.
